# EUROPÄISCHE PATENTANMELDUNG

(11) **EP 0 851 165 A2**
(43) Veröffentlichungstag der Anmeldung: **01.07.1998**
(21) Anmeldenummer: 97120053.0
(22) Anmeldetag: 15.11.1997
(51) Int. Cl.: F16L 43/00

(54) **Verfahren und Vorrichtung zur Herstellung eines Rohrknies**

(30) Priorität: 23.12.1996 AT 751/96; 26.02.1997 AT 125/97
(71) Anmelder: Hörtnagl, Vinzenz, 6166 Fulpmes (AT)
(72) Erfinder: Hörtnagl, Vinzenz, 6166 Fulpmes (AT)
(74) Vertreter: Torggler, Paul Norbert

(57) **Zusammenfassung**

Ein Verfahren zur Herstellung eines Rohrknies. Vorerst wird der Randabschnitt eines geraden Rohrstückes (1,3) in einem Winkel von mindestens annähernd 22,5° zur Querschnittsebene des Rohrstückes (1,3) abgeschnitten. Darauf wird der elliptische Rohrrand (8) kreisrund gebogen und anschließend wird der Rohrrand (8) zu einem Anschlußflansch (2,4) nach außen abgebogen und vorzugsweise kreisrund geschnitten. Das Abbiegen des Rohrrandes (8) erfolgt mit einem Stempel (10). Das Rohrstück (1, 3) wird dabei unbeweglich gehalten und der Stempel (10) linear entweder senkrecht zur Schnittebene des Rohrstückes (1,3) oder in der Richtung der Rohrlängsachse (15) des Rohrstückes (1,3) bewegt.

## Beschreibung

Die Erfindung bezieht sich auf ein Verfahren zur Herstellung eines Rohrknies, wobei vorerst der Randabschnitt eines geraden Rohrstückes in einem Winkel von 15 bis 30°, vorzugsweise annähernd 22,5°, zur Querschnittsebene des Rohrstückes abgeschnitten und anschließend der Rohrrand zu einem Anschlußflansch nach außen abgebogen und vorzugsweise kreisrund geschnitten wird.

Weiters bezieht sich die Erfindung auf eine Vorrichtung zur Durchführung des Verfahrens.

Ein Rohrknie, das mit dem erfindungsgemäßen Verfahren herstellbar ist, weist ein gerades, mittleres Rohrstück auf, das an beiden Enden mit einem Anschlußflansch mit kreisförmigem Umfang versehen ist. Die Ebenen in denen die Anschlußflansche liegen, sind in entgegengesetzten Richtungen im gleichen Winkel zur Längsachse des Rohrstückes geneigt. Zwei anschließende Rohrstücke, die jeweils an einem Ende einen Anschlußflansch aufweisen, sowie Rohrklemmen zum Verbinden der Anschlußflansche der Rohrstücke ergänzen das Rohrknie. Das Rohrknie wird meistens aus Stahlblech gefertigt, kann jedoch auch aus Messing, Kupfer, Edelstahl und anderen ziehbaren Materialien hergestellt werden.

Ein derartiges Rohrknie hat den Vorteil, daß es direkt an der Baustelle jedem gewünschten Winkel angepaßt werden kann. Damit die Rohrstücke einwandfrei gedreht werden können, ist es notwendig, daß sie kreisförmige Anschlußflansche aufweisen. Da die Wandung eines schräg durchschnittenen Zylinders bekannterweise eine Ellipse beschreibt, werden nach dem Stand der Technik kreisförmige Flanschringe an die Rohrstücke angeschweißt.

Neuere Verfahren sehen vor, daß die Flansche durch Walzen oder Drücken ausgebildet werden. Nachteilig an diesen Verfahren ist, daß die Anschlußflächen der Flansche vielfach uneben werden, beispielsweise Rillen und Wülste aufweisen. Um die Dichtheit des Rohrknies zu gewährleisten, müßten derartige Flansche abgedreht werden.

Aufgabe der Erfindung ist es, ein Verfahren und eine Vorrichtung zur Herstellung eines Rohrknies der eingangs erwähnten Art zu schaffen, die eine erhöhte Produktion ermöglichen und eine Nachbehandlung der Oberflächen, insbesondere der Dichtflächen, der Flansche überflüssig machen.

Im Hinblick auf das Verfahren wird die erfindungsgemäße Aufgabe der Erfindung dadurch gelöst, daß das Abbiegen des Rohrrandes mit einem Stempel und einer Matrize erfolgt, wobei das Rohrstück unbeweglich gehalten und der Stempel linear zum Rohrrand bewegt wird.

Die Stempelfläche ist dabei parallel zur Matrizenfläche ausgerichtet und der Stempel drückt bei umgebogenem Rohrrand gleichzeitig auf den gesamten Rohrrand des Rohrstückes. Mit Bezug auf die erfindungsgemäße Vorrichtung ist vorgesehen, daß die Matrize von mindestens zwei Klemmbacken gebildet wird, die das Rohrstück am Mantel klemmend ballen, wobei die Erzeugenden der Klemmflächen der Klemmbacken parallel zur Rohrlängsachse sind und die Matrizenfläche und die Stempelfläche schräg zur Rohrlängsachse ausgerichtet sind.

Nachfolgend werden Ausführungsbeispiele der Erfindung anhand der Figuren der beiliegenden Zeichnungen beschrieben.

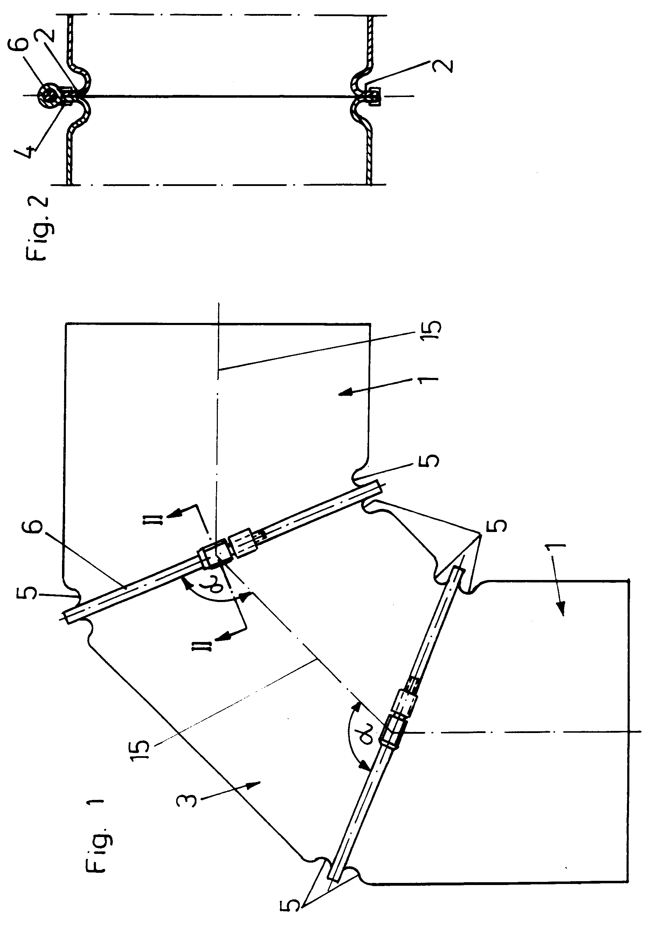

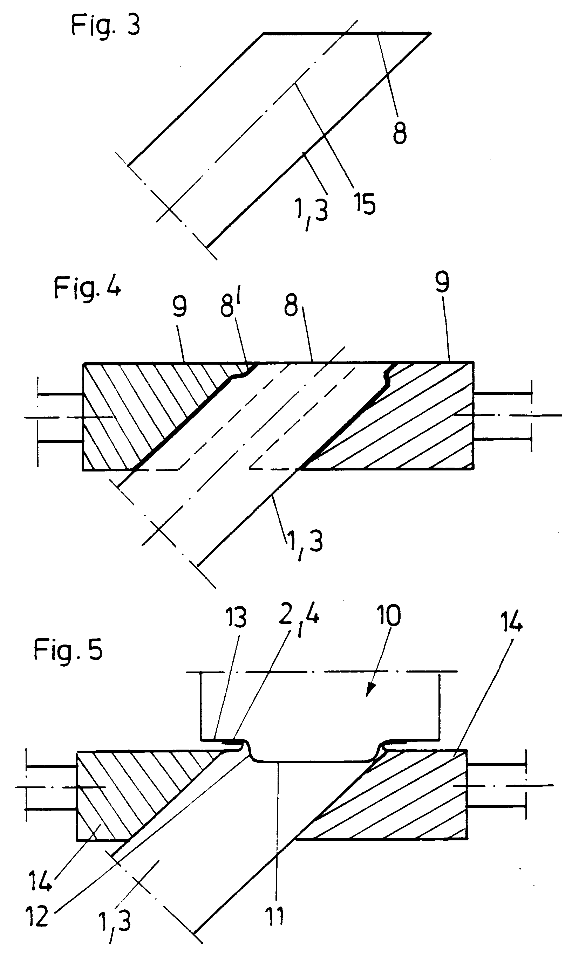

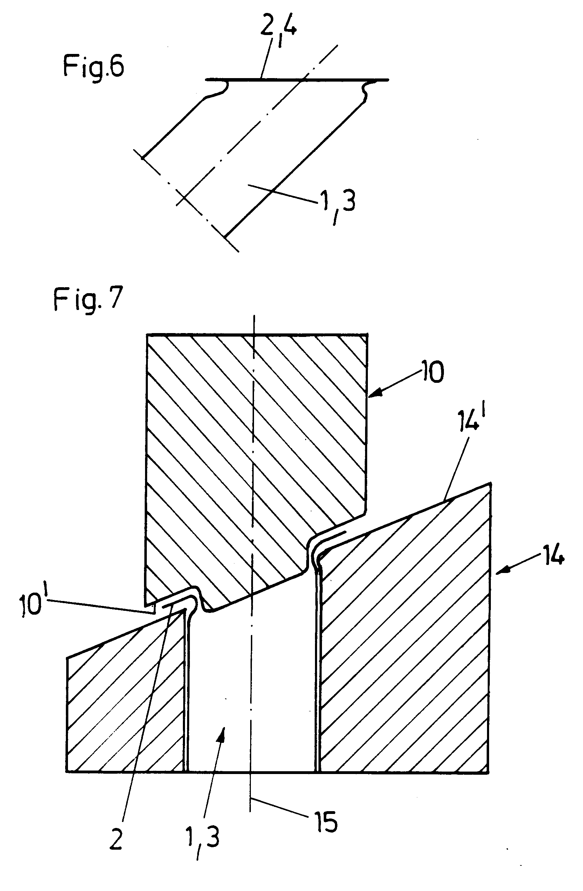

Die Figur 1 zeigt eine schematisch gehaltene Seitenansicht des erfindungsgemäßen Rohrknies, die Figur 2 zeigt einen Schnitt nach der Linie II-II der Figur 2, die Figuren 3 bei 6 zeigen schematisch die Verfahrensschritte zur Ausbildung des Flansches gemäß einem ersten Ausführungsbeispiel der Erfindung, und die Figur 7 zeigt einen Vertikalschnitt durch ein Rohrstück und eine Vorrichtung, gemäß einem weiteren Ausführungsbeispiel der Erfindung.

Das erfindungsgemäße Rohrknie besteht aus zwei äußeren identischen Rohrstücken 1 mit je einem Anschlußflansch 2 und einem mittleren Rohrstück 3 mit zwei Anschlußflanschen 4.

Die Anschlußflansche 2, 4 sind unmittelbar durch Umformen der Rohrränder 8 aus den Rohrstücken 1, 3 herausgebogen. Es werden die Ränder der Rohrstücke 1, 3 an denen die Anschlußflansche 2, 4 ausgebildet werden sollen, zuerst in einem Winkel von 22,5° zur Querschnittsfläche abgeschnitten. Anschließend werden vorzugsweise, wie in der Figur 4 gezeigt, die äußersten Rohrabschnitte 8' zusammengedrückt und der Rohrrand 8 gerundet. Das Zusammendrücken erfolgt durch Preßbacken 9, die mechanisch, hydraulisch oder pneumatisch beaufschlagbar sind. Daraufhin werden die Rohrränder 8 nach außen abgebogen, sodaß sie die in der Figur 6 gezeigte Lage einnehmen und, wenn notwendig, im gleichen oder einem weiteren Arbeitsgang kreisrund geschnitten oder gestanzt.

Es ist jedoch auch möglich, vorerst auf einen runden Rohrrand 8 zu verzichten und den Anschlußflansch 2, 4 unmittelbar vom elliptischen Rohrrand 8 abzuwinkeln. Entweder wird anschließend der Anschlußflansch 2, 4 rund geschnitten bzw. gestanzt, oder es wird der Rohrrand 8 vom Stempel 10 in einem Arbeitsgang abgebogen und kreisrund geschnitten. Im letzteren Fall weist der Stempel 10 an seiner Stempelfläche 10 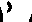 eine Stanzvorrichtung auf.

Bei beiden Verfahren kann die schräge Fläche, die in einem Winkel von 10 bis 35°, vorzugsweise 22,5°, zur Längsachse des Rohrstückes 1, 3 liegt, mittels Stanzen mit einem Werkzeug, Laserschneidtechnik oder Nibbeltechnik erzeugt werden.

Das Ausbiegen des Rohrrandes 8, somit die Bildung der Anschlußflansche 2, 4 erfolgt mittels eines Stempels 10. Der Stempel 10 weist einen kegelstumpfförmigen Vorsatz 11, mit einem, den Mantel eines Kegelstumpfes beschreibenden, Aufweitabschnitt 12 auf sowie einen flachen Anpreßabschnitt 13, an dem der umgebogene Anschlußflansch 2, 4 flach anliegt. Während des Abbiegens des Randes 8 drückt der Stempel 10 gleichzeitig auf den ganzen Rand 8 des Rohrstückes.

Die Neigung des Aufweitabschnittes 12 kann sich über die Höhe des Vorsatzes 11 verändern, wobei der vordere Bereich steiler und der hintere Bereich flach ausgebildet ist.

Während des Umbiegens des Anschlußflansches 2, 4 wird das Rohrstück 1, 3 von Klemmbacken 14 gehalten, die gleichzeitig die Matrize der Vorrichtung bilden. Die Klemmbacken 14 schließen unterhalb des abgerundeten Abschnittes 8 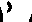 des Rohrrandes 8 ab. Die Bildung des Anschlußflansches 2, 4 erfolgt mit einer einzigen Bewegung des Stempels 10, der in herkömmlicher Weise in eine Presse eingesetzt ist. Der Stempel 10 kann aber auch in jedem Winkel von parallel zur Rohrachse bis zu einer Abweichung von 35° in alle Richtungen bewegt werden.

Während im Ausführungsbeispiel nach der Figur 5 der Stempel 10 senkrecht zur Schnittebene des Rohrstückes 1, 3 bewegt wird, erfolgt diese Bewegung im Ausführungsbeispiel nach der Figur 7 entlang der Rohrlängsachse 15 des Rohrstückes 1, 3. Die Stempelfläche 10 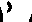 und die Matrizenfläche 14 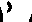 sind zueinander parallel und in einem Winkel zur Rohrlängsachse 15 des Rohrstückes 1, 3 ausgerichtet. Der Winkel liegt im Bereich von zwischen 10° - 35°, im allgemeinen bei 22,5°, wodurch sich die gebräuchlichste Winkelstellung eines Rohrknies ergibt.

Die die Matrize bildenden Klemmbacken 14 können auch oberhalb des Stempels 10 angeordnet sein. Der Stempel 10 wird dann beim Preßvorgang von unten nach oben bewegt.

Die auf die erfindungsgemäße Art hergestellten Anschlußflansche 2, 4 zeichnen sich durch eine glatte Oberfläche aus, die keinerlei Nachbehandlung notwendig macht.

Die Rohrstücke 1, 3 werden mittels Verschlußringen 6 in herkömmlicher Weise verspannt. Die Verschlußringe 6 weisen vorteilhaft einen V-förmigen Querschnitt auf, sodaß die zueinander parallelen Flansche 2, 4 zusammengezogen werden und es zu einem Spanneffekt kommt. Zusätzlich kann in die Verschlußringe eine Dichtschnur eingelegt werden, um die Abdichtung des Rohrknies zu verbessern.

## Patentansprüche

1. Verfahren zur Herstellung eines Rohrknies, wobei vorerst der Randabschnitt eines geraden Rohrstückes in einem Winkel von 15 bis 30°, vorzugsweise annähernd 22,5°, zur Querschnittsebene des Rohrstückes abgeschnitten und anschließend der Rohrrand zu einem Anschlußflansch nach außen abgebogen und vorzugsweise kreisrund geschnitten wird, dadurch gekennzeichnet, daß das Abbiegen des Rohrrandes (8) mit einem Stempel (10) und einer Matrize erfolgt, wohei das Rohrstück (1, 3) unbeweglich gehalten und der Stempel (10) linear zum Rohrrand (8) bewegt wird.

2. Verfahren nach Anspruch 1, dadurch gekennzeichnet, daß der Stempel (10) entweder senkrecht zur Schnittebene des Rohrstückes (1, 3) oder in der Richtung Rohrlängsachse (15) des Rohrstückes (1, 3) bewegt wird.

3. Verfahren nach Anspruch 1 oder 2, dadurch gekennzeichnet, daß der Stempel (10), senkrecht zur Schnittebene des Rohrstückes (1,3) bewegt wird, wobei die Rohrlängsachse (15) in einem Winkel von 10 bis 35°, vorzugsweise 22,5° zur Matrizenfläche (14) ausgerichtet ist.

4. Verfahren nach Anspruch 1 oder 2, dadurch gekennzeichnet, daß der Stempel (10) schräg in einem Winkel von bis zu 35° zur Schnittebene des Rohrstückes (1, 3) in der Richtung der Rohrlängsachse (15) bewegt wird.

5. Verfahren nach einem der Ansprüche 1 - 4, dadurch gekennzeichnet, daß ein Stempel (10) eingesetzt wird, der mindestens einen kegelstumpfförmigen Aufweitabschnitt (12) und vorzugsweise einen flachen Preßabschnitt (13) aufweist.

6. Verfahren nach einem der Ansprüche 1 - 5, dadurch gekennzeichnet, daß nach dem Abschneiden des Randabschnittes und vor dem Abbiegen des Rohrrandes (8) zu einem Anschlußflansch (2, 4) der elliptische Rohrrand kreisrund gebogen wird.

7. Verfahren nach einem der Ansprüche 1 bis 5, dadurch gekennzeichnet, daß das kreisrunde Abschneiden und das Abbiegen des Rohrrandes (8) zu einem Anschlußflansch (2, 4) in einem Arbeitsgang oder zwei Arbeitsgängen erfolgt.

8. Verfahren nach einem der Ansprüche 1 bis 7, dadurch gekennzeichnet, daß während des Abbiegens des Randes (8) mit dem Stempel (10) gleichzeitig auf den gesamten Rand (8) des Rohrstückes (1, 3) gedrückt wird.

9. Vorrichtung zur Durchführung des Verfahrens nach einem der Ansprüche 1 - 8 mit einer Matrize mit einer Matrizenfläche und einem Stempel mit einer zur Matrizenfläche parallelen Stempelfläche, dadurch gekennzeichnet, daß die Matrize von mindestens zwei Klemmbacken (14) gebildet wird, die das Rohrstück (1, 3) am Mantel klemmend haften, wobei die Erzeugenden der Klemmflächen der Klemmbacken (14) parallel zur Rohrlängsachse (15) und die Matrizenfläche (14 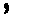 ) und die Stempelfläche (10 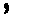 ) schräg zur Rohrlängsachse (15) ausgerichtet sind.

10. Vorrichtung nach Anspruch 9, dadurch gekennzeichnet, daß der Neigungswinkel der Matrizenfläche (14 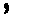 ) und der Stempelfläche (10 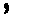 ) zur Rohrlängsachse (15) zwischen 10° und 35° liegt, vorzugsweise 22,5° beträgt.

11. Vorrichtung nach Anspruch 8 oder Anspruch 9, dadurch gekennzeichnet, daß der Stempel (10) an der Stempelfäche (10 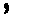 ) eine Stanzvorrichtung aufweist, mittels der der Randabschnitt beim Abbiegen des Rohrrandes (8) kreisrund geschnitten wird.

12. Vorrichtung nach einem der Ansprüche 8 bis 11, dadurch gekennzeichnet, daß die die Matrize bildenden Klemmbacken (14) oberhalb des Stempels (10) angeordnet sind und der Stempel (10) beim Preßvorgang von unten nach oben bewegt wird.

13. Vorrichtung nach einem der Ansprüche 9 bis 12, dadurch gekennzeichnet, daß der Stempel (10) während des Abbiegens des Randes (8) gleichzeitig auf den gesamten Rand (8) des Rohrstückes (1, 3) drückt.
